# EUROPÄISCHE PATENTANMELDUNG

(11) **EP 4 768 216 A1**
(43) Veröffentlichungstag der Anmeldung: **01.07.2026**
(21) Anmeldenummer: 25223331.7
(22) Anmeldetag: 15.12.2025
(51) Int. Cl.: B29C 37/00, A47K 3/02, B29C 33/00, B29C 44/06, B29C 44/58, B29C 44/08

(54) **FORMGEBUNGSVORRICHTUNG ZUR HERSTELLUNG EINER ALS GIESSSCHAUMBAUTEIL AUSGEFÜHRTEN SANITÄRWANNE, VERFAHREN ZUR HERSTELLUNG EINER SOLCHEN SANITÄRWANNE SOWIE SANITÄRWANNE**

(30) Priorität: 16.12.2024 DE 102024137969
(71) Anmelder: Mechtold, Peter, 96472 Rödental Bayern (DE)
(72) Erfinder: Mechtold, Peter, 96472 Rödental Bayern (DE)
(74) Vertreter: Isarpatent

(57) **Zusammenfassung**

Die vorliegende Erfindung betrifft eine Formgebungsvorrichtung (1) zur Herstellung einer als dreidimensional geformtes Gießschaumbauteil ausgeführten Sanitärwanne (2), mit einer eine Negativform (4) der Sanitärwanne ausbildenden Kavität (5), umfassend eine Mehrzahl von für ein Schließen der Formgebungsvorrichtung miteinander verbindbaren und in einem verbundenen Zustand die Kavität ausbildende Formgebungsteilen (3), wobei an wenigstens einem der Formgebungsteile wenigstens ein Zubehörteil (21) der fertiggestellten Sanitärwanne und/oder wenigstens ein Platzhalter (22) für wenigstens ein nachträglich in der fertiggestellten Sanitärwanne einbaubares Zubehörteil ansetzbar ist. Die vorliegende Erfindung betrifft ferner ein Verfahren zur Herstellung einer solchen Sanitärwanne sowie eine Sanitärwanne.

## Beschreibung

### GEBIET DER ERFINDUNG

Die vorliegende Erfindung betrifft eine Formgebungsvorrichtung zur Herstellung einer dreidimensional geformten, als Gießschaumbauteil ausgeführten Sanitärwanne, ein Verfahren zur Herstellung einer solchen Sanitärwanne sowie eine in dem Verfahren hergestellte Sanitärwanne.

### TECHNISCHER HINTERGRUND

Sanitärwannen bilden in der Ausführung als Bade- und/oder Duschwanne oder als Waschbecken einen Bestandteil von Badezimmern. Darüber hinaus kommen Sanitärwannen auch in medizinischen Versorgungs- und Rehabilitierungseinrichtungen, Heil-, Thermal- und Kurbädern zum Einsatz. Daneben werden Sanitärwannen im Wellness- und Hotelgewerbe aber auch im privaten Bereich als Whirlpools oder mit Massagedüsen ausgestattete Wannen in verschiedenen Ausgestaltungen, Formgebungen und Größen verwendet. Neben Sanitärwannen mit aus Keramik, Porzellan, Kunststoff oder Metall gefertigten Wannenkörpern sind auch Sanitärwannen bekannt, deren Wannenkörper aus einem Formschaum gebildet ist und der eine stabilisierende und abdichtende Umhüllung aufweist. Der Wannenkörper derartiger Sanitärwannen wird ganz oder in Teilen aus einem massiven Blockmaterial durch Fräsen und Schneiden herausgearbeitet und in Nachfolgeschritten mit der Umhüllung versehen. Neben dem aufwändigen und zeitintensiven Herstellungsverfahren erweist sich auch der hohe Anfall an Verlustmaterial während der Bearbeitung des Blockmaterials als nachteilig.

Insbesondere bei als Whirlpoolwanne ausgebildeten Sanitärwannen, die zur Erzielung einer Massage- oder Wellnesswirkung mit einer Vielzahl von wasserstrahlenden Luft- und Wasserdüsen, Pumpenaggregaten, Filtereinrichtungen sowie weiteren funktionalen Zubehörteilen wie Beleuchtungseinrichtungen, Sensorik oder Heizelementen ausgestattet sind, ergeben sich zusätzliche technische Herausforderungen. Die genannten Zubehörteile und die hierfür erforderlichen Verrohrungs-, Schlauchleitungs- und Stromführungssysteme müssen bei herkömmlichen Sanitärwannen nachträglich in den vorgefertigten Wannenkörper eingebaut werden. Hierzu sind Durchbrüche, Aussparungen oder nachträgliche Bearbeitungsschritte an dem Wannenkörper erforderlich, die nur aufwändig und mit dem Risiko undichter Schnittstellen ausgebildet werden können. Insbesondere im Bereich der Durchdringungen und Verbindungspunkte entstehen potentielle Leckstellen, die im Betrieb einem hydrostatischen Wasserdruck und mechanischen Spannungen ausgesetzt sind und sich deshalb häufig als schwierig dauerhaft und zuverlässig abzudichten erweisen.

Hinzu kommt, dass die bei Whirlpoolwannen unvermeidbare, umfangreiche Verrohrung innerhalb eines meist nur unzureichend wärmeisolierten Zwischenraums zwischen Wannenkörper und Außenverkleidung geführt wird. Dies führt zu erheblichen Wärmeverlusten über die Leitungssysteme an die Umgebung und damit zu einem erhöhten Heizbedarf, wodurch sich die Energiebilanz solcher Sanitärwannen nachteilig gestaltet. Zudem sind Leckageorte in dem ausgeschäumten oder beengten Zwischenraum häufig nur schwer zugänglich, was Wartung, Reparatur und hygienische Reinigung erschwert.

Dies ist ein Zustand, den es zu verbessern gilt.

### ZUSAMMENFASSUNG DER ERFINDUNG

Vor diesem Hintergrund liegt der vorliegenden Erfindung die Aufgabe zugrunde, eine Vorrichtung und ein Verfahren für die Herstellung einer als Gießschaumbauteil ausgeführten Sanitärwanne mit reduziertem Zeit- und Materialaufwand zu schaffen.

Erfindungsgemäß wird diese Aufgabe gelöst durch eine Formgebungsvorrichtung mit den Merkmalen des Patentanspruchs 1, durch ein Verfahren mit den Merkmalen des Patentanspruchs 9 und/oder durch eine Sanitärwanne mit den Merkmalen des Patentanspruchs 13.

Die erfindungsgemäße Lösung sieht eine Formgebungsvorrichtung zur Herstellung einer als dreidimensional geformtem Gießschaumbauteil ausgeführten Sanitärwanne vor. Die Formgebungsvorrichtung weist eine die Negativform der Sanitärwanne ausbildende Kavität auf und umfasst eine Mehrzahl von für ein Schließen der Formgebungsvorrichtung miteinander verbindbaren und in einem verbundenen Zustand die Kavität ausbildenden Formgebungsteilen. An wenigstens einem der Formgebungsteile ist dabei wenigstens ein Zubehörteil der fertiggestellten Sanitärwanne und/oder wenigstens ein Platzhalter für wenigstens ein nachträglich in der fertiggestellten Sanitärwanne einbaubares Zubehörteil ansetzbar.

Weiterhin sieht die erfindungsgemäße Lösung ein Verfahren zur Herstellung einer als Gießschaumbauteil ausgeführten Sanitärwanne in einer erfindungsgemäßen Formgebungsvorrichtung vor. Das Verfahren umfasst ein Bereitstellen der Formgebungsteile im nicht verbundenen Zustand; ein Auftragen eines Trennmittels auf die Kavität begrenzende Innenflächen der Formgebungsteile; ein Aufbringen eines ersten Beschichtungsmittels auf den Innenflächen und Aushärten des ersten Beschichtungsmittels; ein Aufbringen eines zweiten, das erste überlagernden Beschichtungsmittels auf den Innenflächen und Aushärten des zweiten Beschichtungsmittels; ein Schließen der Formgebungsvorrichtung durch Verschwenken oder Verklappen der Formgebungsteile zum Ausbilden der Kavität und/oder Ausbilden einer Steck-, Rast-, Klemm- oder Schraubverbindung zwischen den Formgebungsteilen (3) zum Ausbilden der Kavität; ein Verfüllen der Kavität mit einem fließfähigen Gießschaum, insbesondere einem Zweikomponenten-Polyurethanflüssigschaum, und ein Entformen der als Gießschaumbauteil ausgeführten Sanitärwanne nach Aushärten des Gießschaums.

Weiterhin sieht die erfindungsgemäße Lösung eine im erfindungsgemäßen Verfahren hergestellte Sanitärwanne vor. Die Sanitärwanne weist dabei einen Wannenkörper mit einem mehrschichtigen Aufbau auf und umfasst einen aus einem Gießschaum gebildeten, inneren Wannenkern, eine den Wannenkern umschließende, insbesondere aus einem Polyurethan-Weichbeschichtungsmaterial gebildete erste Schicht und eine auf der ersten Schicht aufgebrachte, insbesondere aus einem elastischer Polyurethan-Lack gebildete, zweite Schicht. Eine Sanitärwanne im Sinne der Erfindung bezeichnet dabei grundlegend Wannen, wannenförmige oder wannenähnliche Gefäße, Becken oder dergleichen zur Verwendung in einem Sanitärbereich, die unter anderem ein offenes, größeres, tieferes und eventuell längliches Gefäß, insbesondere zum Baden, Duschen oder Waschen aufweisen. Eine Sanitärwanne im Sinne der Erfindung umfasst demnach insbesondere Badewannen, Duschwannen, Whirlpools, Fußbadewannen, Armbadewannen, Sitzbadewannen, medizinische und geriatrische Badewannen, Geburtshilfebadewannen, Waschbecken etc. Umfasst sind auch vornehmlich fest installierte Becken oder Wannen, die im Küchenbereich, beispielsweise als Spülbecken oder - wannen zum Einsatz kommen.

Die der vorliegenden Erfindung zugrunde liegende Idee besteht darin, die Kavität in einer schließ- und öffenbaren Formgebungsvorrichtung so zu dimensionieren, dass deren Rauminhalt dem Rauminhalt des fertiggestellten Gießschaumbauteiles entspricht und die Ausbildung des mehrschichtigen Aufbaus des Gießschaumbauteiles in einer einzigen Vorrichtung ermöglicht. Dabei kann von der inneren Schichtung des Gießschaumbauteiles ausgehend der schichtweise Aufbau in der Vorrichtung erstellt werden. Der Aufbau erfolgt somit von außen, d.h. von der Beschichtung kommend, nach innen, d. h. auf den zuletzt eingebrachten, geschäumten Wannenkern zu. Der Aufbau der Formgebungsvorrichtung aus mehreren Formgebungsteilen vereinfacht im nicht geschlossenen Zustand den Auftrag der äußeren Schichten des Gießschaumbauteiles auf den Formgebungsteilen, während durch Verbinden der dann bereits beschichteten Formgebungsteile zum Schließen der Formgebungsvorrichtung, die die Negativform des Gießschaumbauteiles bildende Kavität entsteht. Diese kann dann in einfacher Art und Weise mit dem Gießschaum verfüllt werden, um das Gießschaumbauteil, d.h. bei Herstellung der Sanitärwanne den Wannenkörper fertigzustellen. Die Beschichtung bildet dabei die stabilisierende äußere Schale oder Hülle des Gießschaumbauteiles, die lediglich noch mit dem Schaummaterial verfüllt werden muss. Ein weiterer Vorteil ist die sich aus dem Herstellungsverfahren ergebende, stabile und enge Verbindung von Beschichtung und geschäumtem Füllmaterial. Darüber hinaus ermöglicht die Dimensionierung der Kavität sowie die Ausbildung der Formgebungsteile ein werkseitiges Ansetzen oder Einformen von Zubehörteilen oder hierfür vorgesehenen Platzhaltern bereits vor dem Verfüllen der Kavität mit dem Gießschaum. Dadurch kann ein nachträgliches Durchbohren oder Bearbeiten des bereits fertiggestellten Wannenkörpers entfallen, wodurch potenzielle Leckagepunkte zuverlässig vermieden werden können. Ferner können mit dem Zubehörteil verbundene Leitungsführungen, wie Verrohrungen, Schlauchleitungen oder Stromleitungen, während des Ausschäumvorgangs unmittelbar in den thermisch isolierenden Gießschaumkern eingebettet werden. Dies führt zu einer besonders vorteilhaften thermischen Entkopplung der Leitungssysteme von der Umgebung, wodurch Wärmeverluste wirksam reduziert und ein im Betrieb verringerter Energiebedarf der Sanitärwanne ermöglicht wird. Insgesamt kann somit ein vollständig funktional ausgestatteter mehrschichtiger Wannenkörper in einem einzigen, effizienten Fertigungsschritt hergestellt werden, wobei die technische Betriebssicherheit und Energieeffizienz der hergestellten Sanitärwanne nachhaltig verbessert werden kann. Zudem wird nach dem Entformen wird somit ein Gießschaumbauteil, insbesondere eine Sanitärwanne, zur Verfügung gestellt, das bereits sämtliche Beschichtungen auf dem aus einem geschäumten und ausgehärteten Schaummaterial gebildeten Grundkörper aufweist und bedingt durch den Beschichtungsaufbau bei geringem Gewicht über eine hohe Bauteilstabilität verfügt. Die Formgebungsvorrichtung ermöglicht die Herstellung von Sanitärwannen, die als Gießschaumbauteile ausgeführt sind, mit reduziertem Material- und Zeitaufwand, da die zeitaufwändige und materialverlustreiche Bearbeitung eines massiven Materialblocks mit anschließendem Beschichtungsauftrag entfällt. Die Formgebungsvorrichtung erweitert auch den Spielraum bei der Gestaltung des jeweiligen Gießschaumbauteils durch entsprechende Anpassung der Formgebungsteile hinsichtlich Größe, Geometrie und Auswahl und Farbgebung des Beschichtungsmaterials.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer Weiterbildung ist vorgesehen, dass jedes Formgebungsteil als Einzelteil zur Verfügung stellbar ist, wobei die Kavität durch Kombination mehrerer Einzelteile ausbildbar ist und wobei die Einzelteile insbesondere über Steck-, Rast-, Klemm- oder Schraubverbindungen verbindbar sind, um die Kavität auszubilden.

Durch die Bereitstellung von voneinander lösbaren und frei kombinierbaren Einzelteilen der Formgebungsvorrichtung ergibt sich eine besonders hohe Flexibilität bei der Gestaltung der Kavität. Die Formgebungsvorrichtung kann je nach gewünschter Ausführungsform der Sanitärwanne an unterschiedliche geometrische Abmessungen und Konturen angepasst werden, ohne dass hierfür eine vollständig neue, monolithische Form hergestellt werden muss. Stattdessen lassen sich durch Austausch oder Hinzufügen einzelner Formgebungsteile variierende Formkomplexitäten, Wanneninnenkonturen oder Funktionsbereiche abbilden, was die Herstellung verschiedener Sanitärwannen in einem modularen Formkonzept ermöglicht. Dies reduziert den Fertigungsaufwand sowie die Werkzeugkosten und bietet eine hohe Variantenvielfalt bei gleichzeitig verkürzten Rüstzeiten.

Insbesondere bei Sanitärwannen mit komplexer Innengeometrie, wie beispielsweise Whirlpoolwannen, die oft eine individuelle Anordnung von Massagedüsen, Sitz- oder Liegeflächen oder ergonomischen Konturen aufweisen, erlaubt die modulare Ausbildung der Formgebungsteile eine einfache Anpassbarkeit an verschiedene Funktionslayouts. Anwender- oder kundenspezifische Konfigurationen lassen sich hierbei durch die Auswahl geeigneter Einzelteile der Formgebungsvorrichtung gezielt umsetzen, wodurch unterschiedliche Ausstattungsvarianten ohne grundlegende Werkzeuganpassungen realisierbar werden. Darüber hinaus können einzelne Formgebungsteile speziell auf die Integration bestimmter Zubehörbereiche ausgelegt sein, wodurch eine präzise Abbildung der jeweiligen Innenkontur und der Zubehörpositionen in der herzustellenden Sanitärwanne gewährleistet ist. Die modulare Bauweise der Formgebungsvorrichtung kann zu einer hohen Gestaltungsfreiheit, zu einer verbesserten Anpassbarkeit an verschiedene Bauteilausführungen sowie zu einer effizienteren und wirtschaftlicheren Herstellung von Sanitärwannen, insbesondere von Whirlpoolwannen mit variabler Innenkonfiguration führen.

Gemäß einer Weiterbildung sind die Formgebungsteile in einem nicht geschlossenen Zustand der Formgebungsvorrichtung über insbesondere an aneinander liegenden Außenkanten vorgesehene Scharniere schwenk- oder klappbar miteinander verbunden. Durch die Scharniere wird der Übergang vom offenen zum geschlossenen Zustand der Formgebungsvorrichtung durch Führung der Formgebungsteile vorteilhaft vereinfacht. Die schwenk- oder klappbare Verbindung ermöglicht ein präzises und wiederholbares Schließen der Formgebungsvorrichtung. Dies vereinfacht den Produktionsprozess und reduziert die Zeit, die für das Zusammensetzen der Formgebungsvorrichtung benötigt wird. Die Verwendung von Scharnieren stellt sicher, dass die Formgebungsteile bei jedem Produktionszyklus genau in der vorgesehenen Position zusammengefügt werden. Der schwenk- oder klappbare Mechanismus erleichtert den Zugang zu den Innenflächen der Formgebungsteile im nicht verbundenen Zustand, d.h. bei geöffneter Formgebungsvorrichtung. Dies ermöglicht ein gleichmäßiges und kontrolliertes Auftragen der Beschichtungsmaterialien auf die Kavitätsbegrenzungen und stellt sicher, dass die Schichten sauber und ohne Unterbrechungen aufgebracht werden. Da die Scharniere das Verbinden der Formgebungsteile und das Schließen der Formgebungsvorrichtung effizient gestalten, wird der gesamte Herstellungsprozess beschleunigt. Gleichzeitig minimieren sie den Bedarf an zusätzlichen Hilfsmitteln wie Klemmen oder Befestigungen. Die schwenk- oder klappbare Verbindung ermöglicht zudem eine einfache Anpassung der Formgebungsteile, sodass verschiedene Größen und Geometrien der als Gießschaumbauteile ausgeführten Sanitärwanne realisiert werden können. Dies erweitert den Anwendungsbereich der Vorrichtung erheblich, insbesondere im Hinblick auf individuelle oder komplexe Formgebungen. Die Möglichkeit, die Formgebungsteile schnell und präzise zu schließen, reduziert den Platzbedarf und die Komplexität der Produktionslinien und erhöht die Effizienz in der Durchführung der Arbeitsschritte.

Gemäß einer Weiterbildung weisen die Formgebungsteile korrespondierende Aufnahmen für im verbundenen Zustand anordenbare Verbindungsmittel, insbesondere Stifte oder Schrauben auf. Vorteilhaft wird hierdurch eine exakte Positionierung der Formgebungsteile zueinander erreicht und es werden gleichzeitig Passungenauigkeiten minimiert. Durch den Einsatz von Stiften oder Schrauben wird eine stabile mechanische Verbindung der Formgebungsteile erreicht. Dies verhindert ein unbeabsichtigtes Verschieben oder Verrutschen der Teile während des Herstellungsprozesses, insbesondere beim Einfüllen des Gießschaums. Die Stabilität wirkt sich direkt auf die Qualität und Maßhaltigkeit der hergestellten Sanitärwanne bzw. des diese bildenden Gießschaumbauteils aus. Die Verwendung standardisierter Verbindungsmittel wie Stifte oder Schrauben erleichtert das wiederholte Verbinden und Lösen der Formgebungsteile. Dies ist insbesondere in Serienproduktionen vorteilhaft, da die Verbindung schnell und zuverlässig hergestellt und wieder gelöst werden kann. Die korrespondierenden Aufnahmen und festen Verbindungsmittel tragen darüber hinaus vorteilhaft dazu bei, die Kavität im verbundenen Zustand dicht zu halten und ein Austreten von Gießschaum zu verhindern.

Gemäß einer alternativen Weiterbildung weisen die Formgebungsteile auf von der Kavität abgewandten Außenseiten korrespondierende, im verbundenen Zustand ineinandergreifende Steck-, Rast- oder Spannmittel auf. Durch die Verwendung von Steck-, Rast- oder Spannmitteln wird der Verbindungsprozess deutlich beschleunigt. Im Vergleich zu traditionellen Verbindungsmethoden wie Schrauben oder Stiften ist keine zusätzliche Werkzeugnutzung erforderlich. Dies spart Zeit und erhöht die Effizienz, insbesondere in der Serienproduktion. Die ineinandergreifenden Verbindungsmittel ermöglichen ein werkzeugloses Verbinden der Formgebungsteile. Dadurch wird die Handhabung für das Bedienpersonal erleichtert und der Herstellungsprozess vereinfacht. Die Steck-, Rast- oder Spannmittel gewährleisten eine feste mechanische Verbindung der Formgebungsteile im verbundenen Zustand. Dies sorgt vorteilhaft für eine stabile Kavität, die den Belastungen während des Einfüllens und Aushärtens des Gießschaums standhält, ohne dass sich die Formgebungsteile verschieben.

Gemäß einer Weiterbildung weist die Kavität eine im verbundenen Zustand der Formgebungsteile offene, durch ein gesondertes Formgebungsteil verschließbare Einfüllöffnung auf. Die offene Einfüllöffnung ermöglicht vorteilhaft ein einfaches Einfüllen des fließfähigen Gießschaummaterials. Das gesonderte Formgebungsteil dient dazu, die Kavität nach dem Befüllen sicher und dicht zu verschließen, wodurch ein kontrollierter Schäumprozess gewährleistet wird. Als weiterer Vorteil ist anzusehen, dass während des Befüllens eingeschlossene Luft leicht durch die offene Einfüllöffnung entweichen kann und die Gefahr von Lufteinschlüssen im geschäumten Formbauteil verringert wird.

Das gesonderte Formgebungsteil kann zeitlich flexibel angebracht werden, sodass der Schäumprozess optimal gesteuert werden kann. Dies ermöglicht eine Anpassung an unterschiedliche Geometrien oder Größen der Formbauteile. Da das gesonderte Formgebungsteil die Kavität verschließt, trägt es zusätzlich zur mechanischen Stabilität der Formgebungsvorrichtung bei, insbesondere während des Aushärtens des Schaummaterials. Dies ist besonders vorteilhaft, wenn hohe Fülldrücke auftreten. Das gesonderte Formgebungsteil kann leicht ausgetauscht oder an unterschiedliche Geometrien der Einfüllöffnung angepasst werden. Dies erhöht die Flexibilität der Vorrichtung und ermöglicht eine Anpassung an verschiedene Produktionsanforderungen. Das gesonderte Formgebungsteil kann des Weiteren dazu verwendet werden, eine Abschlussfläche oder einen Sockel an das Gießschaumbauteil bzw. die Sanitärwanne an- oder auszuformen.

Gemäß einer Weiterbildung sind in die Formgebungsteile und/oder das gesonderte, die Kavität verschließende Formgebungsteil Entlüftungskanäle der Kavität eingeformt. Vorteilhaft ermöglichen die in die Formgebungsteile integrierten Entlüftungskanäle das kontrollierte Entweichen eingeschlossener Luft während des Befüllens der Kavität mit dem fließfähigen Gießschaum. Dadurch wird verhindert, dass Lufteinschlüsse entstehen, die die Homogenität und mechanische Stabilität des hergestellten Gießschaumbauteils beeinträchtigen. Die Entlüftungskanäle tragen vorteilhaft auch zu einer gleichmäßigen Verteilung des Gießschaummaterials in der Kavität bei. Durch den geregelten Abtransport von Luft während der Expansion des Schaummaterials wird der Schäumprozess effizienter, wodurch eine verbesserte Formtreue und Oberflächenqualität der Sanitärwanne bzw. des Gießschaumbauteils erreicht wird. Die Integration der Entlüftungskanäle direkt in die Formgebungsteile eliminiert zudem die Notwendigkeit separate Entlüftungseinrichtungen vorsehen zu müssen und reduziert vorteilhaft die Komplexität der Vorrichtung. Als weiterer Vorteil ist anzusehen, dass die Entlüftungskanäle eine kontrollierte Druckentlastung während des Befüll- und Aushärteprozesses gewährleisten und damit das Risiko, dass die Formgebungsteile durch übermäßigen Innendruck beschädigt werden oder die Kavität undicht wird, verringern.

Erfindungsgemäß ist in den Formgebungsteilen wenigstens ein Zubehörteil der fertiggestellten, als Gießschaumbauteil ausgeführten Sanitärwanne und/oder wenigstens ein Platzhalter für ein nachträglich einbaubares Zubehörteil einsetzbar. Die Möglichkeit, Zubehörteile wie Abflüsse, Wassereinlässe, Düsen oder andere funktionale Elemente direkt in die Formgebungsteile einzusetzen, reduziert vorteilhaft den Aufwand für die nachträgliche Montage dieser Komponenten. Dadurch wird der Produktionsprozess effizienter und kostengünstiger. Platzhalter in den Formgebungsteilen gewährleisten demgegenüber eine exakte und reproduzierbare Positionierung der Zubehörteile in der Sanitärwanne bzw. dem Gießschaumbauteil und verbessern vorteilhaft die Funktionalität und Ästhetik des Endprodukts, insbesondere bei Sanitärwannen mit komplexer Geometrie. Durch den Einsatz von Zubehörteilen oder Platzhaltern während des Herstellungsprozesses entfallen zudem nachträgliche Arbeiten wie Bohren, Fräsen oder andere Anpassungen am fertigen Bauteil. Die Möglichkeit, Platzhalter für nachträglich einzubauende Zubehörteile einzusetzen, erlaubt auch eine größere Flexibilität in der Gestaltung der Formgebungsvorrichtung und des Endprodukts. So können unterschiedliche Konfigurationen für verschiedene Anwendungen einfacher realisiert werden. Die Integration von Zubehörteilen oder Platzhaltern während des Schäumprozesses stellt vorteilhaft eine nahtlose Verbindung zwischen diesen Komponenten und dem geschäumten Material sicher. Die Dichtheit und Stabilität des fertigen Gießschaumbauteils, insbesondere bei Sanitärwannen, die hohen Belastungen oder Feuchtigkeit ausgesetzt sind, wird dadurch verbessert. In der Serienfertigung ermöglicht diese Weiterbildung eine standardisierte und automatisierte Integration von Zubehörteilen oder Platzhaltern, wodurch vorteilhaft die Produktionskapazität erhöht und die Fehlerquote gesenkt wird.

Gemäß einer Weiterbildung ist vorgesehen, dass an wenigstens einem der Formgebungsteile wenigstens eine mit dem Zubehörteil verbundene oder dem nachträglich in der fertiggestellten Sanitärwanne einbaubaren Zubehörteil verbindbare Verrohrung, Schlauchleitung oder Stromleitung ansetzbar ist. Durch das werkseitige Ansetzen von Leitungsführungen an wenigstens einem Formgebungsteil können die für den Betrieb der Sanitärwanne notwendigen Rohr-, Schlauch- und/oder Kabelverbindungen bereits während des Formgebungsprozesses gezielt positioniert und im Anschluss direkt in den zu schäumenden Wannenkern eingebettet werden. Dies erlaubt eine vollständige Integration der technischen Infrastruktur in den mehrschichtigen Wannenkörper, ohne dass dieser nachträglich durchbohrt, gefräst oder anderweitig bearbeitet werden muss. Auf diese Weise werden potenzielle Leckstellen an Schnitt- und Durchdringungsbereichen zuverlässig vermieden und die Dichtheit der später im Betrieb wasser- oder druckbelasteten Bereiche nachhaltig erhöht. Die innerhalb des Schaummaterials angeordneten Leitungen erfahren zudem eine umfassende thermische Umschließung, wodurch ein unerwünschter Wärmetransport an die Umgebung wirksam reduziert wird. Dies wirkt sich insbesondere in Anwendungen mit warmem oder temperiertem Wasser energieeffizient aus und führt zu einem reduzierten Heizbedarf während des Betriebs.

Ein besonderer Vorteil ergibt sich bei Sanitärwannen, die als Whirlpoolwanne ausgestaltet sind und bei denen eine Vielzahl von Massagedüsen, Luft- und Wassereinlässen oder Beleuchtungseinrichtungen eingebunden werden muss. Die erfindungsgemäße Integration der zugehörigen Leitungswege bereits in der Formgebungsvorrichtung ermöglicht hier eine präzise, bedarfsgerechte und sicher dichtende Anordnung aller Funktionskomponenten sowie eine optimale thermische Entkopplung der Funktionselemente von der Umgebung. Gleichzeitig wird der Montage- und Wartungsaufwand signifikant reduziert, da die Leitungen ohne beengte Zwischenräume und ohne schwer zugängliche Hohlräume im fertiggestellten Wannenkörper geführt werden. Es kann somit eine erhöhte Betriebssicherheit, verlängerte Lebensdauer und hygienisch verbesserte Konstruktion der Sanitärwanne bei wirtschaftlicher Herstellung auch komplex ausgestatteter Whirlpoolwannen mit hoher Funktionsintegration ermöglicht werden.

Gemäß einer Weiterbildung ist vorgesehen, dass das wenigstens eine Zubehörteil der fertiggestellten Sanitärwanne und/oder das nachträglich in der fertiggestellten Sanitärwanne einbaubare Zubehörteil als Luftdüse, Wasserstrahldüse, Lichtelement, Heizeinheit, Umwälzvorrichtung, Filtereinrichtung, Luft- oder Wasserströmungsgenerator, Skimmer, Siphon, Zulauf-, Ablauf- oder Düsenanschluss oder Anschlussarmatur ausgebildet ist. Durch die Bereitstellung einer Vielzahl unterschiedlicher Zubehörteile kann der Funktionsumfang der Sanitärwanne erweitert werden. Die Zubehörteile können bereits während der Herstellung fest in den mehrschichtigen Wannenkörper integriert werden oder alternativ über entsprechende Platzhalter nachträglich dichtend eingebaut werden. Auf diese Weise lassen sich Sanitärwannen bedarfsgerecht ausstatten, ohne dass nachfolgend umfangreiche Bearbeitungsschritte oder Durchdringungen des Wannenkörpers erforderlich sind. Dies gilt insbesondere für als Whirlpoolwanne ausgebildete Sanitärwannen, bei denen regelmäßig mehrere Massagedüsen, Luft- und Wassereinlässe, Heizeinheiten oder Lichtelemente in unterschiedlichen Anordnungen zum Einsatz kommen. Die Möglichkeit, diese funktionalen Komponenten direkt bei der Formgebung zu positionieren und einzubetten, verbessert sowohl die Dichtheit als auch die thermische Effizienz der entsprechenden Einbauteile und trägt damit zu einer erhöhten Betriebssicherheit und einer energieeffizienten Nutzung der Sanitärwanne bei.

Das erfindungsgemäße Verfahren sieht in einer Weiterbildung vor, dass vor oder nach dem Schritt des Auftragens eines Trennmittels oder vor oder nach dem Schritt des Aufbringens eines ersten Beschichtungsmittels auf den Innenflächen und Aushärten des ersten Beschichtungsmittels ein Ansetzen wenigstens eines Zubehörteils der fertiggestellten Sanitärwanne oder wenigstens eines aus der fertiggestellten Sanitärwanne entformbaren Platzhalters für wenigstens ein nachträglich in der fertiggestellten Sanitärwanne einbaubares Zubehörteil und/oder eine mit dem Zubehörteil verbundene oder dem nachträglich in der fertiggestellten Sanitärwanne einbaubaren Zubehörteil verbundene oder verbindbare Verrohrung, Schlauchleitung oder Stromleitung sowie Zulauf-, Ablauf- und/oder Düsenanschlüsse an wenigstens einem Formgebungsteil durchgeführt wird.

Durch dieses frühzeitige Ansetzen der Zubehörteile oder der zugehörigen Leitungssysteme noch vor dem Ausschäumen kann die genaue Positionierung der Funktionskomponenten im fertigen Wannenkörper sichergestellt werden. Zugleich kann das ansonsten erforderliche nachträgliche Öffnen, Bohren oder Bearbeiten der Außen- oder Innenflächen der Sanitärwanne entfallen, wodurch potenzielle Undichtigkeiten an Durchdringungsstellen zuverlässig vermieden werden. Die Zubehörteile oder Platzhalter können somit bereits form- und lagegerecht fixiert sein, wenn das Schaummaterial eingebracht wird, was zu einer medien- und druckdichten Umschäumung der angrenzenden Bereiche führen kann. Die im Schaumkern verlaufenden Leitungen können vollständig von wärmeisolierendem Material umschlossen werden. Dadurch können Wärmeverluste im Betrieb deutlich reduziert werden. Dies ist insbesondere bei einer als Whirlpoolwanne ausgebildeten Sanitärwanne vorteilhaft, bei der im Betrieb dauerhaft warmes oder temperiertes Wasser geführt wird und zahlreiche Leitungswege vorhanden sind. Zudem wird die Montage der technischen Ausstattung auf ein Minimum reduziert, da diese bereits während der Herstellung integriert wird und keine schwer zugänglichen Zwischenräume entstehen, in denen sich Stagnationswasser oder Verunreinigungen ansammeln könnten.

Das erfindungsgemäße Verfahren sieht in einer Weiterbildung nach dem Schritt des Schließens der Formgebungsvorrichtung ein Fixieren der Formgebungsteile durch Einsetzen der Verbindungsmittel und/oder Schließen der ineinandergreifenden Steck-, Rast- oder Spannmittel vor. Das Fixieren der Formgebungsteile nach dem Schließen der Formgebungsvorrichtung gewährleistet vorteilhaft eine stabile und sichere Verbindung und verhindert ein Verrutschen oder eine unbeabsichtigte Bewegung der Formgebungsteile während des Befüllens der Kavität und des Aushärtens des Gießschaums. Durch das Fixieren der Formgebungsteile wird die Formgebungsvorrichtung in ihrer vorgesehenen Geometrie gehalten, sodass die Kavität exakt die gewünschte Form des Gießschaumbauteils abbildet. Dies trägt zu einer hohen Wiederholgenauigkeit bei der Herstellung bei. Die Möglichkeit, entweder Verbindungsmittel wie Stifte oder Schrauben einzusetzen und/oder Steck-, Rast- oder Spannmittel zu schließen, erlaubt eine flexible Anpassung an unterschiedliche Produktionsanforderungen. Dies ist besonders vorteilhaft, wenn die Vorrichtung für verschiedene Gießschaumbauteile verwendet werden soll. Das Fixieren der Formgebungsteile trägt vorteilhaft dazu bei, die Dichtigkeit der Kavität sicherzustellen und zu verhindern, dass flüssiger Gießschaum während des Befüllens austritt. Die Kombination aus Schließen der Formgebungsvorrichtung und anschließendem Fixieren gewährleistet eine intuitive und effiziente Handhabung, insbesondere in der Serienproduktion.

Gemäß einer Weiterbildung sieht das erfindungsgemäße Verfahren nach dem Ausbilden der Kavität, ein weiteres Beschichten von Stoßstellen der Formgebungsteile innerhalb der Kavität mit dem ersten und/oder zweiten Beschichtungsmittel vor. Das zusätzliche Beschichten der Stoßstellen innerhalb der Kavität sorgt für eine nahtlose Ausbildung der Beschichtung, verhindert das Eindringen von Gießschaum in Spalten oder ungewollte Bereiche und trägt zu einer hohen Dichtheit der Kavität bei. Die Nachbearbeitung von Stoßstellen innerhalb der Kavität stellt vorteilhaft sicher, dass die Innenflächen der Kavität eine glatte und gleichmäßige Beschichtung aufweisen. Dies erhöht die Qualität der äußeren Oberflächen der hergestellten als Gießschaumbauteil ausgeführten Sanitärwanne und reduziert die Notwendigkeit von Nacharbeiten am Endprodukt.

Gemäß einer Weiterbildung sieht das erfindungsgemäße Verfahren nach dem Verfüllen der Kavität mit einem fließfähigen Gießschaum ein Verschließen der Einfüllöffnung der Kavität mit dem gesonderten Formgebungsteil vor. Das Verschließen der Einfüllöffnung mit dem gesonderten Formgebungsteil verhindert vorteilhaft das Austreten von fließfähigem Gießschaum aus der Kavität. Dies reduziert Materialverluste und gewährleistet eine effiziente Nutzung des Schaummaterials. Durch das Verschließen der Einfüllöffnung wird die Kavität zudem vollständig geschlossen, wodurch ein gleichmäßiger Innendruck während des Aushärtens des Schaummaterials aufrechterhalten wird. Dies trägt zur Formtreue und Maßhaltigkeit des hergestellten Gießschaumbauteils bei. Als weiterer Vorteil ist anzusehen, dass das Verschließen der Einfüllöffnung eine kontrollierte und homogene Expansion des Schaummaterials innerhalb der Kavität gewährleistet und den Schäumprozess vergleichmäßigt.

Gemäß einer Weiterbildung des erfindungsgemäßen Verfahrens erfolgt das Aufbringen des ersten und/oder zweiten Beschichtungsmittels in einem Heißspritzverfahren, wobei das erste Beschichtungsmittel insbesondere als elastischer Polyurethan-Lack und/oder das zweite Beschichtungsmittel als Polyurethan-Weichbeschichtungsmaterial ausgebildet ist. Durch die Anwendung eines Heißspritzverfahrens wird vorteilhaft eine gleichmäßige Verteilung des Beschichtungsmaterials auf den Innenflächen der Kavität erreicht und damit die Oberflächenqualität des fertigen Bauteils verbessert. Durch die Erwärmung des Beschichtungsmaterials beim Heißspritzverfahren wird dessen Viskosität reduziert und das Fließverhalten verbessert. Vorteil hiervon ist, dass eine gleichmäßige Oberflächenstruktur erreicht und die Haftung der Beschichtungsmaterialen verbessert wird. Durch das Heißspritzverfahren werden vorteilhaft chemische Reaktionsprozesse der Beschichtungsmaterialien beschleunigt und damit Produktionszeiten reduziert. Durch die Steuerung der Temperatur- und Sprühparameter kann das Heißspritzverfahren zudem an unterschiedliche Materialeigenschaften angepasst werden. Unter einem Heißspritzverfahren im Sinne der vorliegenden Erfindung ist eine Auftragverfahren zu verstehen, in dem Beschichtungsmaterialien, beispielsweise Polyurethan-Lacke oder Polyurethan-Weichbeschichtungsmaterialien, in einem Reaktor auf die benötigte Verarbeitungstemperatur (typischerweise 60-90 °C) erhitzt werden. Das erwärmte Material wird dann über eine Düse unter hohem Druck in einem fein zerstäubten Sprühstrahl auf die Innenflächen der Kavität aufgetragen. Polyurethan-Lacke werden beispielsweise als dünne, insbesondere und abhängig von der Anwendung, zwischen 1 mm und 10 mm, insbesondere zwischen 2 mm und 5 mm, bevorzugt 3 mm dicke, elastische Schutz- und Deckschicht aufgebracht, die schnell aushärtet und eine robuste, glatte Oberfläche ausbildet. Polyurethan-Weichbeschichtungsmaterialien werden demgegenüber in dickeren Schichten aufgetragen, um eine flexible, stoßabsorbierende und isolierende Schicht zu erzeugen. Das Verfahren gewährleistet dabei vorteilhaft eine effiziente Beschichtung mit jeweils gleichmäßiger, definierter Schichtdicke bei hoher Haftung der Beschichtungsmaterialien.

Gemäß einer Ausgestaltung des erfindungsgemäßen Verfahrens kann das erste Beschichtungsmittel als elastischer Polyurethan-Lack ausgebildet sein. Elastische Polyurethan-Lacke zeichnen sich durch hohe Elastizität und Widerstandsfähigkeit aus. Sie absorbieren mechanische Belastungen, wodurch Risse oder Abplatzungen der Beschichtung vermieden werden. Vorteilhaft wird dadurch die Lebensdauer und die Widerstandsfähigkeit des Formbauteils erhöht. Als weiterer Vorteil ist anzusehen, dass der Polyurethan-Lack eine schützende Deckschicht ausbildet, die das fertige Formbauteil vor Feuchtigkeit, chemischen Einflüssen, UV-Strahlung und mechanischem Abrieb schützt. Dies ist insbesondere bei Sanitärwannen von Vorteil, die in feuchten Umgebungen eingesetzt und häufig genutzt werden. Ein elastischer Polyurethan-Lack gewährleistet zudem nicht nur den funktionalen Schutz, sondern ermöglicht auch eine individuelle Farbgebung des Formbauteils durch Beigabe entsprechender Farbpigmente. Für die Verwendung im erfindungsgemäßen Verfahren eignen sich verschiedene elastische Polyurethan-Lacke, darunter beispielsweise 1K-Polyurethan-Lacke, 2K-Polyurethan-Lacke, wasserbasierte Polyurethan-Lacke oder lösemittelbasierte Polyurethan-Lacke, ohne die Erfindung hierauf zu beschränken.

Gemäß einer Ausgestaltung des erfindungsgemäßen Verfahrens kann das zweite Beschichtungsmittel als Polyurethan-Weichbeschichtungsmaterial ausgebildet sein. Polyurethan-Weichbeschichtungsmaterialien zeichnen sich durch hohe Elastizität und stoßabsorbierenden Eigenschaften aus. Vorteilhaft schützt die unmittelbar auf dem Schaumkörper aufliegende Beschichtung aus Polyurethan-Weichbeschichtungsmaterialien das Formbauteil vor mechanischen Belastungen. Das Material bildet zudem eine weiche, gleichmäßige und griffige Oberfläche aus. Für die Verwendung im erfindungsgemäßen Verfahren eignen sich verschiedene Arten von Polyurethan-Weichbeschichtungsmaterialien, darunter beispielsweise 2K-Polyurethan-Weichbeschichtungen, bestehend aus zwei Komponenten (Polyol und Isocyanat), lösemittelfreie Polyurethan-Beschichtungen, UV-beständige Polyurethan-Weichbeschichtungen oder heißspritzbare Polyurethan-Weichbeschichtungen, ohne die Erfindung hierauf zu beschränken. Vorteilhaft kann die Materialstärke der Polyurethan-Weichbeschichtung entsprechend den Anforderungen des Gießschaumbauteils flexibel angepasst werden, um unterschiedliche Belastungs- oder Isolierungsanforderungen zu erfüllen.

Gemäß einer Weiterbildung des erfindungsgemäßen Verfahrens ist das fließfähige Schaummaterial als Zweikomponenten-Polyurethanflüssigschaum (2K-PU-Schaum) ausgebildet ist. Zweikomponenten-Polyurethanflüssigschaum ermöglicht vorteilhaft eine einfache und kontrollierbare Verarbeitung. Das Schaummaterial wird in flüssigem Zustand verarbeitet, wodurch eine präzise Befüllung der Kavität selbst bei komplexen Geometrien ermöglicht wird. Nach der chemischen Reaktion und dem Aushärten bildet der Zweikomponenten-Polyurethanflüssigschaum einen festen Schaumkörper mit hoher Formstabilität und mechanischer Festigkeit aus und erweist sich so als besonders vorteilhaft bei der Herstellung von Sanitärwannen. Als weiterer Vorteil ist anzusehen, dass die Eigenschaften des Schaummaterials, insbesondere bezüglich Dichte, Stauchhärte und Raumgewicht, durch Anpassung der Mischverhältnisse der beiden Komponenten, Polyol und Isocyanat, variabel gestaltet werden können, um die Anforderungen spezifischer Gießschaumbauteile zu erfüllen. Als Zweikomponenten-Polyurethanflüssigschaum (2K-PU-Schaum) im Sinne der vorliegenden Erfindung ist ein Zweikomponenten-Polyurethanflüssigschaum zu verstehen, der aus zwei chemischen Hauptkomponenten, d.h. Polyol (Komponente 1), einem alkoholbasierten Stoff, der als Basismaterial dient, und Isocyanat (Komponente 2), das chemisch mit dem Polyol in einer exothermen Reaktion reagiert und durch Bildung von Gasen zur Schaumbildung führt. Die beiden Komponenten werden in einem definierten Verhältnis in einem Mischkopf oder einer speziellen Mischvorrichtung kombiniert und homogen vermengt. Die Reaktion führt zur Expansion und Verfestigung des Schaummaterials, das sich unmittelbar nach dem Mischen und während der Offenzeit des Gemischs im noch flüssigen Zustand innerhalb der Kavität verteilt und nach Aufschäumen aushärtet. Für die Verwendung im erfindungsgemäßen Verfahren eignen sich verschiedene Arten von Zweikomponenten-Polyurethanflüssigschäumen, darunter beispielsweise hochdichte PU-Schäume, niederdichte PU-Schäume, offen-zellige PU-Schäume oder geschlossen-zellige PU-Schäume, ohne jedoch die Erfindung hierauf zu beschränken. Neben dem zuvor beschriebenen Zweikomponenten-Polyurethanflüssigschaum sind alternativ folgende Materialien von der vorliegenden Erfindung umfasst und erfindungsgemäß verwendbar: Einkomponenten-Polyurethanschaum, Epoxidharz-basierte Schäume, Polyethylenschaum oder Phenolharzschaum.

Die erfindungsgemäße Sanitärwanne sieht in einer Weiterbildung vor, dass diese als Badewanne, Waschbecken, Duschwanne, Duschtasse, oder Whirlpoolwanne ausgebildet ist. Durch den Einsatz von Materialien wie einem formstabilen Gießschaum und Polyurethan-Beschichtungen ist die Sanitärwanne deutlich leichter als herkömmliche Wannen aus Keramik oder Metall. Dies vereinfacht vorteilhaft den Transport, die Installation und die Handhabung, insbesondere bei großformatigen Wannen wie Badewannen oder Whirlpools. Das erfindungsgemäße Verfahren ermöglicht vorteilhaft eine freie Gestaltung der Wannenform. Dadurch können komplexe Geometrien, ergonomische Designs oder spezielle Anpassungen für individuelle Kundenwünsche realisiert werden. Dies ist insbesondere für moderne Badezimmerdesigns oder Spezialanwendungen im medizinischen oder Wellnessbereich von Vorteil. Die Kombination aus einem leichten Kernmaterial und widerstandsfähigen Beschichtungen gewährleistet vorteilhaft, dass die Wannen auch bei intensiver Nutzung langlebig und pflegeleicht sind. Eine Sanitärwanne im Sinne der Erfindung bezeichnet dabei grundlegend Wannen, wannenförmige oder wannenähnliche Gefäße, Becken oder dergleichen zur Verwendung in einem Sanitärbereich, die unter anderem ein offenes, größeres, tieferes und eventuell längliches Gefäß, insbesondere zum Baden, Duschen oder Waschen aufweisen. Eine Sanitärwanne im Sinne der Erfindung umfasst demnach insbesondere Badewannen, Duschwannen, Whirlpools, Fußbadewannen, Armbadewannen, Sitzbadewannen, medizinische und geriatrische Badewannen, Geburtshilfebadewannen, Waschbecken etc. Umfasst sind auch vornehmlich fest installierte Becken oder Wannen, die im Küchenbereich, beispielsweise als Spülbecken oder -wannen zum Einsatz kommen.

Die erfindungsgemäße Sanitärwanne sieht in einer Weiterbildung vor, dass wenigstens ein Zubehörteil, wenigstens ein entformbarer Platzhalter für wenigstens ein nachträglich in der fertiggestellten Sanitärwanne einbaubares Zubehörteil und/oder eine mit dem wenigstens einen Zubehörteil verbundene oder dem wenigstens einen nachträglich in der fertiggestellten Sanitärwanne einbaubaren Zubehörteil verbundene oder verbindbare Verrohrung, Schlauchleitung oder Stromleitung sowie insbesondere Zulauf-, Ablauf- oder Düsenanschlüsse bei Herstellung in die Sanitärwanne einformbar sind.

Durch das Einformen der Zubehörteile oder der zugehörigen Leitungssysteme bereits während der Herstellung ergibt sich eine vollständige funktionale Integration in den mehrschichtigen Wannenkörper. Die Komponenten werden dabei stoffschlüssig und in exakter Lage im Schaumkern eingebettet, ohne dass nachfolgende Bearbeitungsschritte wie Bohren, Fräsen oder Abdichten von Durchdringungen erforderlich sind. Dies führt zu einer dauerhaft hohen Dichtheit im Betrieb und reduziert die Anfälligkeit für Leckagen oder konstruktionsbedingte Schwachstellen.

Die im Schaummaterial verlaufenden Leitungen erfahren eine vollflächige wärmeisolierende Umschließung, wodurch Wärmeverluste minimiert und der energetische Aufwand für den Betrieb des in der Sanitärwanne befindlichen Wassers signifikant verringert wird. Zudem wird der Innenraum der Sanitärwanne frei von schwer zugänglichen Zwischenräumen gehalten, was eine hygienisch vorteilhafte Konstruktion schafft und Reinigungs- bzw. Wartungsmaßnahmen erleichtert.

Ein besonderes Einsatzgebiet dieser Weiterbildung liegt bei als Whirlpoolwanne ausgestalteten Sanitärwannen, bei denen eine Vielzahl unterschiedlicher Funktionskomponenten wie Massagedüsen, Beleuchtungselemente, Sensorik oder Heizeinheiten in verschiedenen räumlichen Anordnungen vorgesehen sein kann. Das erfindungsgemäße Einformen erlaubt die präzise und layoutflexible Positionierung solcher Funktionseinheiten im Wannenkörper und unterstützt damit eine variantenreiche Gestaltung unterschiedlicher Whirlpool-Konfigurationen, ohne dass hierfür unterschiedliche Grundkörper gefertigt werden müssen.

Neben Zulauf-, Ablauf- und Düsenanschlüssen können auch weitere Zubehörteile in die Wanne integriert werden, wie beispielsweise und ohne die Erfindung hierauf beschränken, Überläufe, Sensoranschlüsse insbesondere für die Steuerung von Temperatur, Füllstand oder Wasserqualität, bevorzugt in Whirlpools, Heizelemente für die direkte Erwärmung des Wassers in der Wanne, LED-Beleuchtungselemente, Massagedüsen, insbesondere für Wasser- oder Luftmassage in Whirlpools oder Wellnesswannen, Haltegriffe und Armaturen, Lautsprecher oder Soundmodule, insbesondere für die Integration von Audio-Systemen in Wellness- oder Luxuswannen. Die nahtlose Integration von Zubehörteilen reduziert vorteilhaft die Anzahl von Fugen und Übergängen, die potenzielle Schwachstellen für Abnutzung oder Undichtigkeiten darstellen.

Die erfindungsgemäße Sanitärwanne sieht in einer alternativen Weiterbildung vor, dass der Wannenkörper entformbare Platzhalter für die Anordnung von Zubehörteilen aufweist. Vorteilhaft gewährleisten die entformbaren Platzhalter, dass Zubehörteile wie Anschlüsse oder Armaturen bei der Endmontage präzise und einfach in den Wannenkörper eingesetzt werden können. Die Verwendung von Platzhaltern erleichtert auch die spätere Montage von Zubehörteilen, da diese nach Bedarf oder auf Kundenwunsch auch nach der Herstellung der Sanitärwanne nachgerüstet werden können, ohne dass umfangreiche Nachbearbeitungen erforderlich sind. Vorteilhaft ermöglichen die Platzhalter auch eine hohe Flexibilität bei der Ausstattung der Sanitärwanne mit Zubehörteilen, die dabei individuell auf verschiedene Anwendungen oder Nutzerwünsche angepasst werden kann. Neben den genannten Zulauf-, Ablauf- oder Düsenanschlüssen können Platzhalter beispielsweise für die folgenden, die Erfindung hierauf jedoch nicht beschränkenden, auch nachrüstbaren Zubehörteile eingeformt werden: Armaturenhalterungen für Wasserhähne oder Mischbatterien, Haltegriffe, Seifen- oder Shampoo-Ablagen, Sensorik-Anschlüsse für beispielsweise Füllstandsensoren, Temperaturfühler oder andere Steuerungselemente, Lautsprecher oder Audioanschlüsse, LED-Lichtinstallationen, Whirlpool-Systeme, beispielsweise für Luft- oder Wasserstrahldüsen sowie Luftanschlüsse, Wasserfilter- oder Desinfektionssysteme oder Aromatherapie-Einheiten. Vorteilhaft minimieren Platzhalter den Bedarf an nachträglichem Bohren oder Fräsen des Wannenkörpers und gewährleisten, dass eine durchgehend glatte Oberfläche der Sanitärwanne bei der Nachrüstung von Zubehörteilen erhalten bleibt.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1: eine perspektivische Ansicht der Formgebungsvorrichtung gemäß einer Ausführungsform der Erfindung im geöffneten Zustand;
- Fig. 2: eine perspektivische Ansicht der Formgebungsvorrichtung gemäß einer Ausführungsform der Erfindung im geschlossenen Zustand;
- Fig. 3: eine perspektivische Ansicht einer Sanitärwanne gemäß einer Ausführungsform der Erfindung;
- Fig. 4: eine schematische Querschnittsansicht eines Wannenkörpers einer Sanitärwanne gemäß einer Ausführungsform der Erfindung;
- Fig. 5: ein schematisches Ablaufdiagramm eines erfindungsgemäßen Verfahrens zur Herstellung der Sanitärwanne aus Fig. 3 gemäß einer weiteren Ausführungsform der Erfindung;
- Fig.6a-c: perspektivische Ansichten einzelner Formgebungsteile der Formgebungsvorrichtung gemäß einer Ausführungsform der Erfindung im nicht verbundenen Zustand;
- Fig.7: eine perspektivische Ansicht eines Formgebungsteils der Formgebungsvorrichtung gemäß einer Ausführungsform der Erfindung;
- Fig.8: eine perspektivische Ansicht eines Formgebungsteils der Formgebungsvorrichtung gemäß einer Ausführungsform der Erfindung;
- Fig.9: eine perspektivische Ansicht eines Formgebungsteils der Formgebungsvorrichtung gemäß einer Ausführungsform der Erfindung; und
- Fig. 10: eine perspektivische Ansicht einer Sanitärwanne gemäß einer Ausführungsform der Erfindung.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausgeführt ist - jeweils mit denselben Bezugszeichen versehen.

### BESCHREIBUNG VON AUSFÜHRUNGSBEISPIELEN

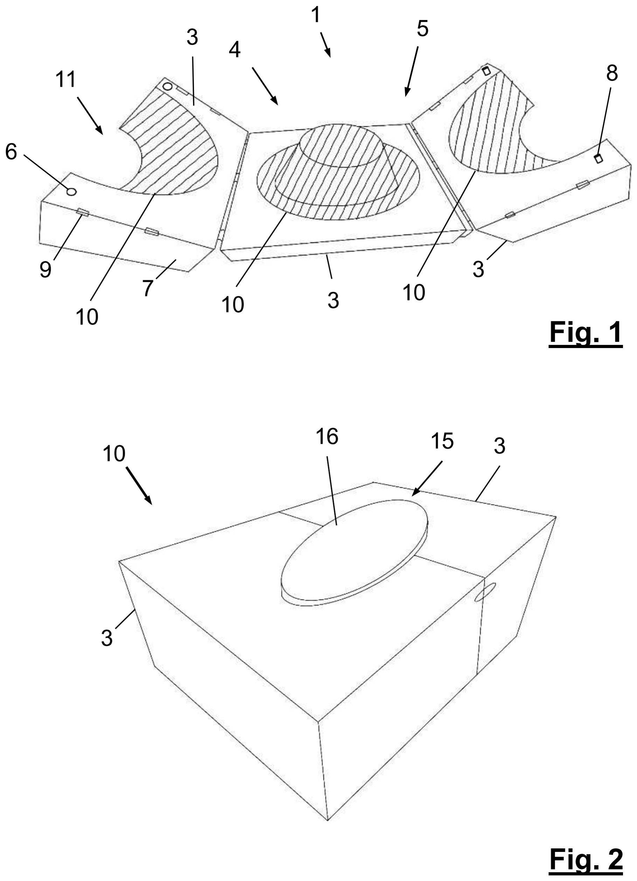

Fig. 1 zeigt eine perspektivische Ansicht einer Formgebungsvorrichtung 1 gemäß einer Ausführungsform der Erfindung im geöffneten Zustand. Die Formgebungsvorrichtung 1 dient zur Ausbildung einer Sanitärwanne 2, beispielsweise einer Badewanne, Duschwanne oder Whirlpoolwanne aus einem Gießschaum. Die Formgebungsvorrichtung 1 umfasst mehrere miteinander verbundene Formgebungsteile 3, die im geschlossenen Zustand eine Negativform 4 mit einer Kavität 5 ausbilden, welche die dreidimensionale Außenkontur der Sanitärwanne 2 definiert. Die gezeigten Formgebungsteile 3 weisen korrespondierende Aufnahmen 6 für Verbindungsmittel 8, insbesondere Stifte oder Schrauben, auf, um die Formgebungsteile 3 im geschlossenen Zustand der Formgebungsvorrichtung 1 zu fixieren. Zudem sind auf den von der Kavität 5 abgewandten Außenseiten 7 der Formgebungsteile 3 korrespondierende, ineinandergreifende Spannmittel 9 vorgesehen, die eine zusätzliche Stabilisierung und ein einfaches Schließen der Formgebungsvorrichtung 1 ermöglichen. Auf den Innenflächen 10 der Formgebungsteile 3, die im geschlossenen Zustand (vgl. Fig. 2), die nach Schließen im Innern 11 der Formgebungsvorrichtung 1 liegende Kavität 5 definieren und begrenzen, wird zunächst ein rückstandsloses Trennmittel aufgetragen, um das spätere Entformen der Sanitärwanne 2 zu erleichtern. Anschließend erfolgt der Auftrag des ersten Beschichtungsmittels, vorzugsweise eines elastischen Polyurethan-Lacks, das eine flexible äußere Schicht 18 der Sanitärwanne 2 ausbildet. Daraufhin wird das zweite Beschichtungsmittel, ein Polyurethan-Weichbeschichtungsmaterial, aufgebracht, welches stoßabsorbierend wirkt und eine zwischen der äußeren Schicht 18 und dem Wannenkern 14 liegende Zwischenschicht 19 ausbildet. Beide Beschichtungsmittel werden mittels eines Heißspritzverfahrens aufgetragen, wodurch eine gleichmäßige Materialverteilung und optimale Haftung gewährleistet wird. Nach Abschluss des Beschichtungsauftrags werden die Formgebungsteile 3 verschwenkt oder verklappt, um die Formgebungsvorrichtung 1 in den geschlossenen Zustand (vgl. Fig. 2) zu verbringen. Dabei werden in die Aufnahmen 6 der Formgebungsteile 3 eingesetzten Verbindungsmittel 8 und die auf den Außenseiten 7 der Formgebungsteile 3 vorgesehenen Spannmittel 9 verwendet, um die einzelnen Formgebungsteile 3 miteinander zu verbinden und die Formgebungsvorrichtung 1 zu schließen. Dadurch wird die Kavität 5 im Innern 11 der Formgebungsvorrichtung 1 vollständig ausgebildet und für die Aufnahme des fließfähigen Gießschaummaterials, vorzugsweise eines Zweikomponenten-Polyurethanflüssigschaums, das den Wannenkern 14 der herzustellenden Sanitärwanne 2 bildet, vorbereitet.

Fig. 2 zeigt eine perspektivische Ansicht der Formgebungsvorrichtung 1 gemäß einer Ausführungsform der Erfindung im geschlossenen Zustand. Die im Ausführungsbeispiel dargestellte Formgebungsvorrichtung 1 dient der Ausbildung einer Sanitärwanne 2, beispielsweise einer Badewanne, Duschwanne oder Whirlpoolwanne. Die Formgebungsvorrichtung 1 besteht aus mehreren in Fig. 2 verbunden dargestellten Formgebungsteilen 3, die im geschlossenen Zustand eine in Fig. 2 nicht sichtbare Negativform 4 in einer Kavität 5 ausbilden, welche die dreidimensionale Kontur der herzustellenden Sanitärwanne 2 definiert.

Nach dem Schließen der Formgebungsvorrichtung 1 wird die Kavität 5 mit einem fließfähigen Zweikomponenten-Polyurethanflüssigschaum befüllt. Das fließfähige Schaummaterial wird hierzu über die oberseits der Formgebungsvorrichtung 1 vorgesehene Einfüllöffnung 15 in die Kavität 5 eingebracht und verteilt sich gleichmäßig in der Kavität 5. Entlüftungskanäle (nicht dargestellt), die in die Formgebungsteile 3 integriert sind, ermöglichen das kontrollierte Entweichen eingeschlossener Luft, wodurch ein homogener und formstabiler Schaumkörper als Wannenkern 14 entsteht. Unmittelbar nach dem Befüllen wird die Einfüllöffnung 15 mit einem gesonderten Formgebungsteil 16 verschlossen, um die Kavität 5 vollständig abzudichten. Nach Ende der sog. Offenzeit setzt der Schäumprozess ein, in dessen Verlauf das Schaummaterial expandiert und die Kavität 5 vollständig ausfüllt. Nach dem Aushärten des Schaummaterials wird die Formgebungsvorrichtung 1 geöffnet, um die fertige Sanitärwanne 2 auszuformen.

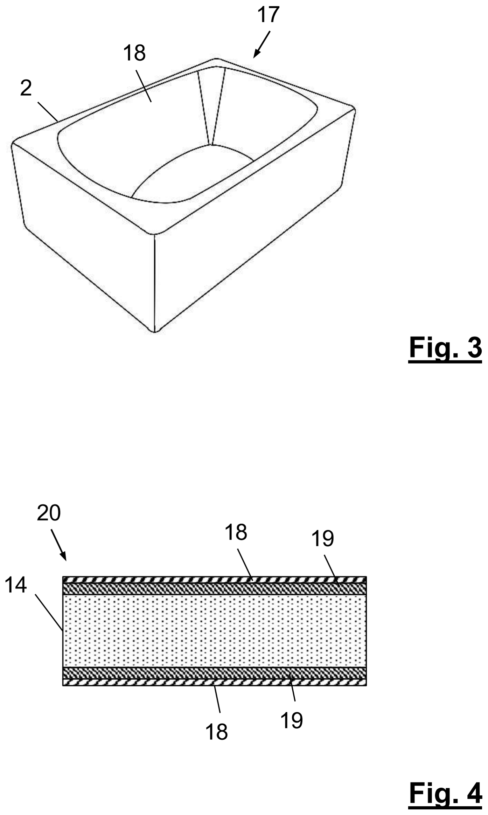

Fig. 3 zeigt eine perspektivische Ansicht einer Sanitärwanne 2 gemäß einer Ausführungsform der Erfindung. Die dargestellte Sanitärwanne 2 ist das Ergebnis des erfindungsgemäßen Herstellungsverfahrens und weist einen mehrschichtigen Aufbau auf, der sowohl funktionale als auch ästhetische Vorteile bietet. Die Oberfläche 17 der Sanitärwanne 2 ist durch eine glatte und widerstandsfähige äußere Schicht 18 definiert, die aus einem elastischen Polyurethan-Lack gebildet ist. Diese äußere Schicht 18 bildet die schützende und flexible Oberfläche 17 der Sanitärwanne 2. In Fig. 3 nicht erkennbar ist unter der äußeren Schicht 18 der Sanitärwanne 2 eine Zwischenschicht 19 angeordnet, die aus einem Polyurethan-Weichbeschichtungsmaterial gebildet ist und unmittelbar auf dem Wannenkern 14 aufliegt.

Der im Ausführungsbeispiel von den Schichten 18, 19 überdeckte und daher nicht sichtbare Wannenkern 14 der Sanitärwanne 2 ist aus einem formstabil ausgehärteten Zweikomponenten-Polyurethanflüssigschaum hergestellt, der nach Ausbildung der Schichten 18, 19 in der geöffneten Formgebungsvorrichtung 1 durch Vergießen der geschlossenen Formgebungsvorrichtung 1 mit einem Zweikomponenten-Polyurethanflüssigschaum gebildet wurde.

Fig. 4 zeigt eine schematische Querschnittsansicht eines Wannenkörpers 20 einer Sanitärwanne 2 gemäß einer Ausführungsform der Erfindung. Der Wannenkörper 20 weist einen mehrschichtigen Aufbau auf und wird in der in Fig. 1 und 2 dargestellten Formgebungsvorrichtung 1 im zuvor beschriebenen Verfahren hergestellt. Der Aufbau erfolgt dabei von außen, d.h. von der äußeren Schicht 18 kommend nach innen, d. h. auf den geschäumten Wannenkern 14 zu. Dabei wird zunächst die erste, äußere Schicht 18 durch Aufbringen eines elastischen Polyurethan-Lackes, beispielsweise in einem Heißspritzverfahren, auf den Formgebungsteilen 3 ausgebildet. Nach Aushärten der äußere Schicht 18 wird auf diese unmittelbar eine aus einem Polyurethan-Weichbeschichtungsmaterial gebildete, zweite Zwischenschicht 19, beispielsweise ebenfalls in einem Heißspritzverfahren aufgetragen. Nach vollständiger Aushärtung der beiden Schichten 18, 19 bilden diese eine die Kavität 5 in der geschlossenen Formgebungsvorrichtung 1 auskleidende Schale oder Außenhülle, die mit einem fließfähigen Zweikomponenten-Polyurethanflüssigschaum (2K-PU-Schaum) vergossen wird, um nach Aufschäumen und Aushärten den Wannenkern 14 zu bilden. Zur Farbgebung der Sanitärwanne 2 kann der Polyurethan-Lack mit Farbpigmenten versehen werden.

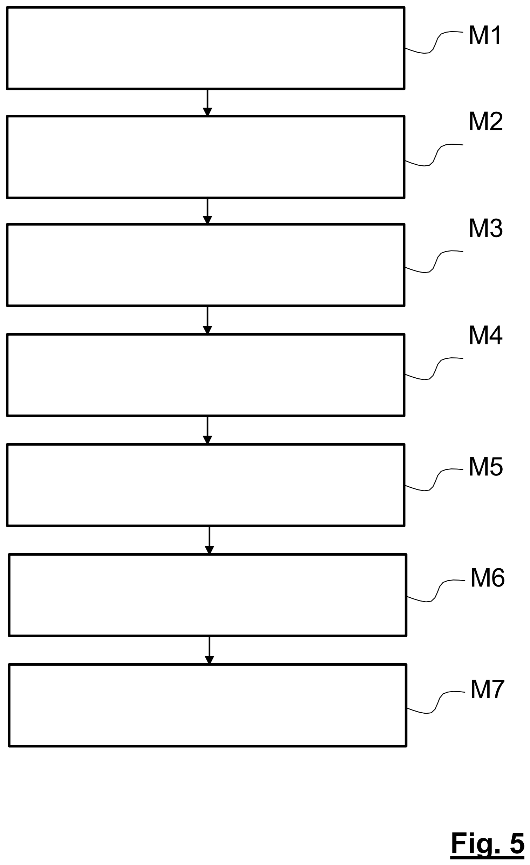

Fig. 5 zeigt ein schematisches Ablaufdiagramm eines erfindungsgemäßen Verfahrens zur Herstellung der Sanitärwanne 2 aus Fig. 3 gemäß einer Ausführungsform der Erfindung. Im Verfahren wird in einem ersten Schritt M1 eine aus mehreren, eine Kavität 5 definierenden Formgebungsteilen 3 gebildete, offene Formgebungsvorrichtung 1 bereitgestellt, wobei sich die Formgebungsteilen 3 im nicht verbundenen Zustand befinden. Im nachfolgenden Schritt M2 erfolgt ein Auftragen eines Trennmittels auf den die Kavität 5 begrenzende Innenflächen 10 der Formgebungsteile 3. Danach wird im Schritt M3 ein Polyurethan-Lack als erstes Beschichtungsmittel auf den Innenflächen 10 der Formgebungsteilen 3 aufgebracht, der dort als äußere Schicht 18 der fertigen Sanitärwanne 2 aushärtet. Im daran anschließenden Schritt M4 erfolgt ein Aufbringen eines Polyurethan-Weichbeschichtungsmaterials als zweites Beschichtungsmittel, unmittelbar auf dem ausgehärteten ersten Beschichtungsmittel. Der Auftrag des zweiten Beschichtungsmittels wird dabei derart vorgenommen, dass dieses das erste Beschichtungsmittel vollständig überdeckt. Nach Aushärten des zweiten Beschichtungsmittels wird die Formgebungsvorrichtung 1 im Schritt M5 durch Verschwenken oder Verklappen der Formgebungsteile 3 oder durch Ausbilden einer Steck-, Rast-, Klemm- oder Schraubverbindung zwischen den Formgebungsteilen 3 geschlossen und im Innern 11 der Formgebungsvorrichtung 1 dabei die Kavität 5 ausgebildet. Im nachfolgenden Schritt M6 erfolgt ein Verfüllen der Kavität 5 mit einem fließfähigen Gießschaum, insbesondere einem Zweikomponenten-Polyurethanflüssigschaum (2K-PU-Schaum) zur Bildung des Wannenkerns 14. Nach dessen Aushärten wird die fertigstellte, als Gießschaumbauteil ausgebildete Sanitärwanne 2 im Schritt M7 nach Öffnen der Formgebungsvorrichtung 1 ausgeformt. Optional kann vor oder nach dem Schritt M2 des Auftragens eines Trennmittels oder vor oder nach dem Schritt des Aufbringens eines ersten Beschichtungsmittels auf den Innenflächen 10 und Aushärten des ersten Beschichtungsmittels ein Ansetzen wenigstens eines Zubehörteils 21 der fertiggestellten Sanitärwanne 2 oder wenigstens eines aus der fertiggestellten Sanitärwanne 2 entformbaren Platzhalters 22 für wenigstens ein nachträglich in der fertiggestellten Sanitärwanne 2 einbaubares Zubehörteil 21 und/oder eine mit dem Zubehörteil 21 verbundene oder dem nachträglich in der fertiggestellten Sanitärwanne 2 einbaubaren Zubehörteil 21 verbundene oder verbindbare Verrohrung 23, Schlauchleitung oder Stromleitung, Zulauf-, Ablauf- und/oder Düsenanschlüsse, an wenigstens einem Formgebungsteil 3 durchgeführt werden.

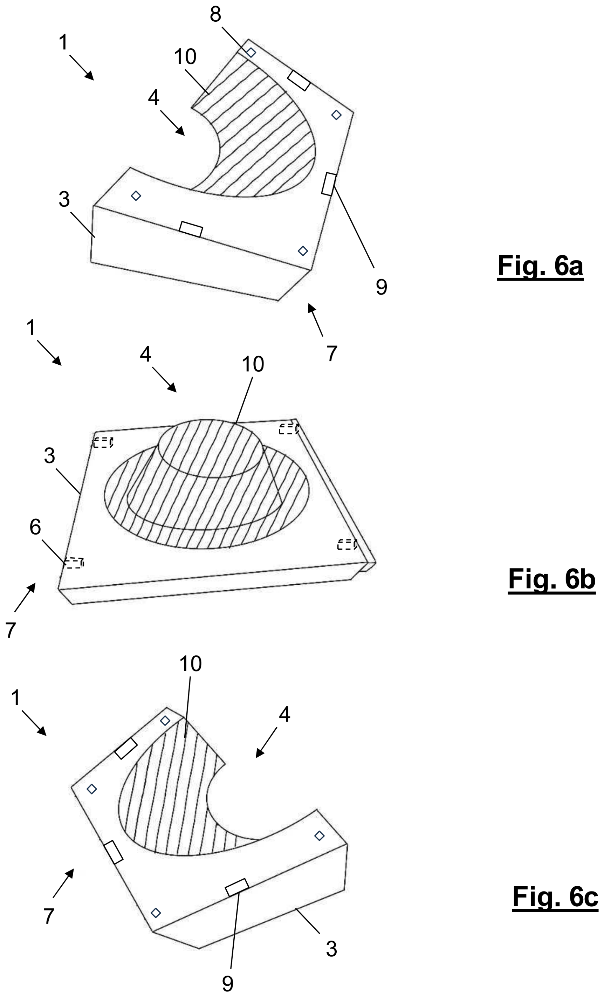

Fig. 6a zeigt eine perspektivische Ansicht eines ersten Formgebungsteils 3 der Formgebungsvorrichtung 1 im nicht verbundenen Zustand. Das Formgebungsteil weist eine an der Innenfläche 10 ausgebildete Negativform 4, Aufnahmen 6 sowie an der Außenseite 7 angeordnete Verbindungsmittel 8 und Spannmittel 9 auf, welche ein lösbares Verbinden mit weiteren Formgebungsteilen ermöglichen.

Fig. 6b zeigt eine perspektivische Ansicht eines zweiten Formgebungsteils 3 der Formgebungsvorrichtung 1 im nicht verbundenen Zustand, mit einer an der Innenfläche 10 ausgebildeten, von der Ausgestaltung des ersten Formgebungsteils abweichenden Negativform 4 sowie an der Außenseite 7 vorgesehenen Aufnahmen 6. Dieses Formgebungsteil kann zur variierenden Ausbildung des Wanneninnenraums mit unterschiedlichen anderen Formgebungsteilen kombiniert werden.

Fig. 6c zeigt eine perspektivische Ansicht eines dritten Formgebungsteils 3 der Formgebungsvorrichtung 1 im nicht verbundenen Zustand, welches eine gekrümmte Ausgestaltung der Negativform 4 an der Innenfläche 10 aufweist und an der Außenseite 7 mit Spannmitteln 9 versehen ist, um in einem verbundenen Zustand zur Ausbildung einer individuell gestaltbaren Kavität 5 beizutragen.

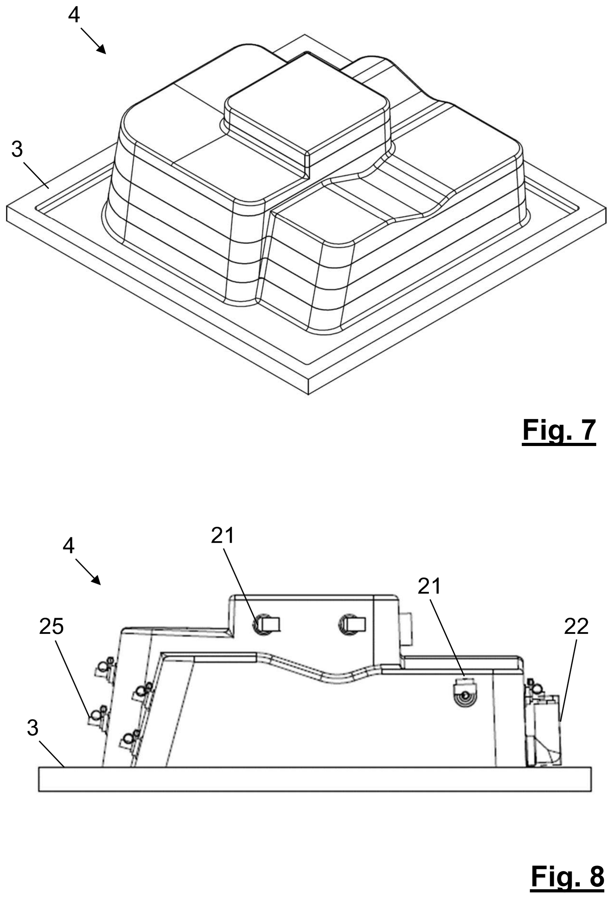

Fig. 7 zeigt eine perspektivische Ansicht eines Formgebungsteils 3 der Formgebungsvorrichtung 1, das eine an der Innenfläche ausgebildete Negativform 4 mit mehreren Stufen- und Konturbereichen aufweist. Das dargestellte Formgebungsteil 3 ist insbesondere zur Herstellung einer als Whirlpool 27 ausgestalteten Sanitärwanne 2 vorgesehen, bei welcher unterschiedliche ergonomische Funktionsbereiche wie Sitz- und Liegezonen sowie lokal vertiefte Abschnitte ausgebildet werden. Durch den modularen Aufbau der Formgebungsvorrichtung 1 kann eine solche komplexe Innengeometrie der Sanitärwanne 2 in der Negativform 4 des jeweiligen Formgebungsteils 3 abgebildet und dadurch flexibel an verschiedene Whirlpoolkonfigurationen angepasst werden.

Fig. 8 zeigt eine perspektivische Ansicht eines Formgebungsteils 3 der Formgebungsvorrichtung 1, bei dem an der an der Innenfläche ausgebildeten Negativform 4 bereits verschiedene Zubehörteile 21 sowie ein Platzhalter 22 angeordnet sind. Die hier beispielhaft dargestellten Zubehörteile können der Ausbildung von Luft- oder Wasserdüsen 25, von Beleuchtungseinrichtungen oder von weiteren Funktionskomponenten dienen, wie sie insbesondere bei einer als Whirlpool ausgestalteten Sanitärwanne 2 vorgesehen sind. Der gezeigte Platzhalter 22 ermöglicht die Ausbildung eines Montageraums im späteren Wannenkörper 20, in dem nach Abschluss des Formgebungsverfahrens beispielsweise eine Heiz- oder Umwälzvorrichtung angeordnet werden kann.

Durch die direkte Anordnung der Zubehörteile oder der hierfür vorgesehenen Platzhalter an dem Formgebungsteil erfolgt deren lage- und funktionsgerechte Integration bereits während des Formgebungsprozesses. Dadurch kann ein nachträgliches Öffnen oder Bearbeiten der Sanitärwanne 2 vermieden werden, während zugleich die insbesondere für Whirlpoolanwendungen erforderlichen technischen Einrichtungen in einer anwendungsoptimierten Position innerhalb des Wannenkörpers 20 fixiert sind.

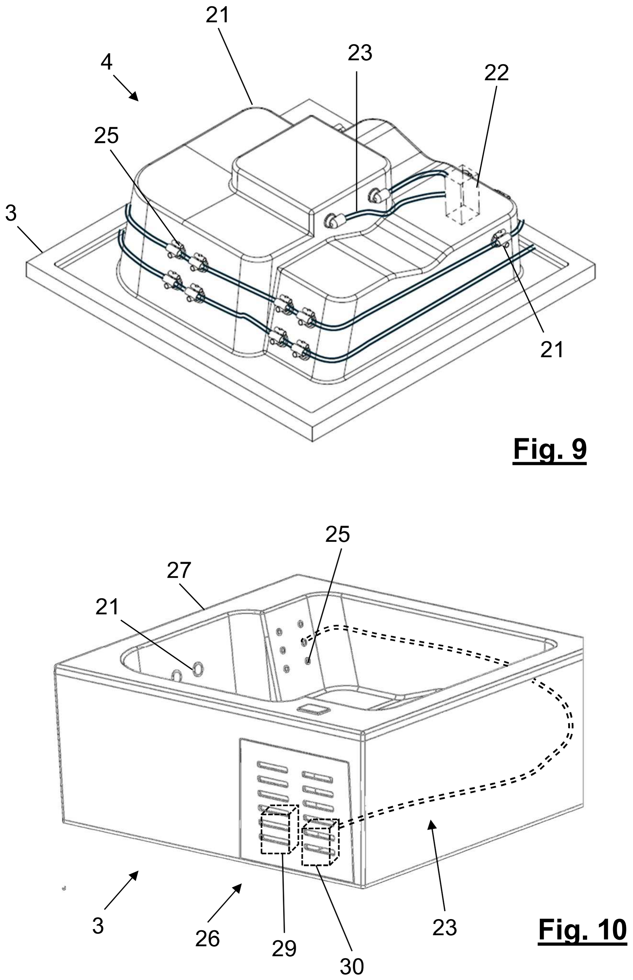

Fig. 9 zeigt eine perspektivische Ansicht eines Formgebungsteils 3 der Formgebungsvorrichtung 1, bei dem an der an der Innenfläche ausgebildeten Negativform 4 mehrere Zubehörteile 21, beispielsweise Luft- oder Wasserdüsen 25, in funktionsgerechter Position vorgesehen sind. Diese Zubehörteile 21 sind über eine Verrohrung 23 miteinander verbunden, die entlang der Konturen des Formgebungsteils 3 geführt ist. Zusätzlich ist ein Platzhalter 22 angeordnet, in dem nach Abschluss des Formgebungsverfahrens funktionale Einrichtungen wie beispielsweise eine Umwälz- oder Heizvorrichtung aufgenommen werden können.

Die Verrohrung 23 ist so gestaltet, dass sie während des Ausschäumens des Wannenkörpers 20 vollständig von dem aufschäumenden Material umschlossen wird. Dadurch entsteht eine dauerhaft geschützte und wärmeisolierte Leitungsführung innerhalb des späteren Schaummaterials. Es wird so die Möglichkeit geschaffen, sämtliche für die Funktionsweise einer insbesondere als Whirlpool 27 ausgestalteten Sanitärwanne 2 erforderlichen Leitungs- und Anschlussstrukturen bereits bei der Formgebung vorzuplatzieren und ohne nachträgliche Bearbeitungsschritte in den Wannenkörper 20 zu integrieren. Auf diese Weise kann eine dichte, wärmetechnisch optimierte und montagearme Ausstattung des Wannenkörpers 20 erzielt werden, wobei die Lage der Zubehörteile 21 und der daran angeschlossenen Verrohrung 23 präzise durch die Negativform 4 vorgegeben ist. Gleichzeitig kann im Bereich des Platzhalters 22 ein definierter Aufnahmeraum 26 für weitere technische Komponenten entstehen, sodass unterschiedliche Whirlpool-Varianten mit variierender Funktionsausstattung durch Austausch oder Ergänzung von Zubehörteilen 21 und Leitungselementen realisierbar sind.

Fig. 10 zeigt eine perspektivische Ansicht einer als Whirlpool ausgestalteten Sanitärwanne 2 gemäß einer Ausführungsform der Erfindung. In der gezeigten Sanitärwanne 2 sind im Innenbereich mehrere Zubehörteile 21, wie etwa Luftdüsen 25 oder Wasserdüsen, in unterschiedlichen Funktionszonen der Innenkontur angeordnet. Diese Zubehörteile 21 sind über eine im Wannenkörper 20 verlaufende Verrohrung 23 miteinander verbunden, die während des Ausschäumens in das Schaummaterial eingebettet wird und dadurch dauerhaft geschützt und wärmeisoliert innerhalb der mehrschichtigen Struktur geführt ist. Auf der Außenseite der Sanitärwanne 2 ist ein Aufnahmeraum 26 angeordnet, der durch einen in der Negativkontur integrierten Platzhalter 22 ausgebildet werden kann. Im Aufnahmeraum 26 können funktionale Einrichtungen wie beispielsweise eine Filtereinrichtung 29 und/oder ein Luft- oder Wasserströmungsgenerator 30 aufgenommen werden. Über die im Wannenkörper 20 integrierte Verrohrung 23 bestehen die notwendigen fluidischen Verbindungen zu den im Innenraum vorgesehenen Düsen und weiteren Einbauten. Diese Gestaltung erlaubt den Abschluss sämtlicher insbesondere für den Whirlpoolbetrieb erforderlichen Montage- und Anschlussarbeiten bereits im Herstellungsprozess, sodass nachträgliche Durchdringungen oder Bearbeitungsschritte am Wannenkörper 20 entfallen.

Durch die integrative Konstruktion wird eine funktionsbereit ausgestattete Whirlpoolwanne mit hohem Maß an Betriebssicherheit, reduziertem Energiebedarf und flexibler Anpassbarkeit der Ausstattung an unterschiedliche Anforderungen und Konfigurationsvarianten zur Verfügung gestellt.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

### Bezugszeichenliste

- 1: Formgebungsvorrichtung
- 2: Sanitärwanne
- 3: Formgebungsteil
- 4: Negativform
- 5: Kavität
- 6: Aufnahme
- 7: Außenseite
- 8: Verbindungsmittel
- 9: Spannmittel
- 10: Innenfläche
- 11: Inneres
- 14: Wannenkern
- 15: Einfüllöffnung
- 16: gesondertes Formgebungsteil
- 17: Oberfläche
- 18: äußere Schicht
- 19: Zwischenschicht
- 20: Wannenkörper
- 21: Zubehörteil
- 22: Platzhalter
- 23: Verrohrung
- 25: Luftdüse
- 26: Aufnahmeraum
- 27: Whirlpool
- 29: Filtereinrichtung
- 30: Luft- oder Wasserströmungsgenerator

- M1 - M7: Verfahrensschritte

## Patentansprüche

1. Formgebungsvorrichtung (1) zur Herstellung einer als dreidimensional geformtem Gießschaumbauteil ausgeführten Sanitärwanne (2), mit einer eine Negativform (4) der Sanitärwanne (2) ausbildenden Kavität (5), umfassend eine Mehrzahl von für ein Schließen der Formgebungsvorrichtung (1) miteinander verbindbaren und in einem verbundenen Zustand die Kavität (5) ausbildende Formgebungsteilen (3), wobei an wenigstens einem der Formgebungsteile (3) wenigstens ein Zubehörteil (21) der fertiggestellten Sanitärwanne (2) und/oder wenigstens ein Platzhalter (22) für wenigstens ein nachträglich in der fertiggestellten Sanitärwanne (2) einbaubares Zubehörteil (21) ansetzbar ist.

2. Formgebungsvorrichtung (1) nach Anspruch 1,
**dadurch gekennzeichnet,**
**dass** jedes Formgebungsteil (3) als ein Einzelteil zur Verfügung stellbar ist, wobei die Kavität durch Kombination mehrerer Einzelteile ausbildbar ist und wobei die Einzelteile insbesondere über Steck-, Rast-, Klemm - oder Schraubverbindungen verbindbar sind, um die Kavität (5) auszubilden.

3. Formgebungsvorrichtung (1) nach Anspruch 1 oder 2, **dadurch gekennzeichnet,**
**dass** die Formgebungsteile (3) in einem nicht geschlossenen Zustand der Formgebungsvorrichtung (1) über insbesondere an aneinander liegenden Außenkanten vorgesehene Scharniere schwenk- oder klappbar miteinander verbunden oder verbindbar sind.

4. Formgebungsvorrichtung (1) nach einem der vorhergehenden Ansprüche,
**dadurch gekennzeichnet,**
**dass** die Formgebungsteile (3) korrespondierende Aufnahmen (6) für im verbundenen Zustand anordenbare Verbindungsmittel (8), insbesondere Stifte oder Schrauben aufweisen und/oder auf von der Kavität (5) abgewandten Außenseiten (7) korrespondierende, im verbundenen Zustand ineinandergreifende Steck-, Rast- oder Spannmittel (9) aufweisen.

5. Formgebungsvorrichtung (1) nach einem der vorhergehenden Ansprüche,
**dadurch gekennzeichnet,**
**dass** in die Formgebungsteile (3) Entlüftungskanäle der Kavität (5) eingeformt sind.

6. Formgebungsvorrichtung (1) nach einem der vorhergehenden Ansprüche,
**dadurch gekennzeichnet,**
**dass** die Kavität (5) eine im verbundenen Zustand der Formgebungsteile (3) offene, durch ein gesondertes Formgebungsteil (16) verschließbare Einfüllöffnung (15) aufweist, insbesondere wobei in das gesonderte Formgebungsteil (16) eingeformte Entlüftungskanäle der Kavität (5) vorgesehen sind.

7. Formgebungsvorrichtung (1) nach einem der vorhergehenden Ansprüche,
**dadurch gekennzeichnet,**
**dass** an wenigstens einem der Formgebungsteile (3) wenigstens eine mit dem Zubehörteil (21) verbundene oder dem nachträglich in der fertiggestellten Sanitärwanne (2) einbaubaren Zubehörteil (21) verbindbare Verrohrung (23), Schlauchleitung oder Stromleitung ansetzbar ist.

8. Formgebungsvorrichtung (1) nach einem der vorhergehenden Ansprüche,
**dadurch gekennzeichnet,**
**dass** das wenigstens eine Zubehörteil (21) der fertiggestellten Sanitärwanne (2) und/oder das nachträglich in der fertiggestellten Sanitärwanne (2) einbaubare Zubehörteil (21) als Luftdüse (25), Wasserstrahldüse, Lichtelement, Heizeinheit, Umwälzvorrichtung, Filtereinrichtung, Luft- oder Wasserströmungsgenerator (30), Skimmer, Siphon, Zulauf-, Ablauf- oder Düsenanschluss, oder Anschlussarmatur ausgebildet ist.

9. Verfahren zur Herstellung einer als Gießschaumbauteil ausgeführten Sanitärwanne (2) in einer Formgebungsvorrichtung (1) nach einem der Ansprüche 1 bis 8, mit den Schritten:
Bereitstellen der Formgebungsteile (3) im nicht verbundenen Zustand;
Auftragen eines Trennmittels auf die Kavität (5) begrenzende Innenflächen (10) der Formgebungsteile (3);
Aufbringen eines ersten Beschichtungsmittels auf den Innenflächen (10) und Aushärten des ersten Beschichtungsmittels;
Aufbringen eines zweiten, das erste überlagernden Beschichtungsmittels auf den Innenflächen (10) und Aushärten des zweiten Beschichtungsmittels;
Schließen der Formgebungsvorrichtung (1) durch Verschwenken oder Verklappen der Formgebungsteile (3) und/oder Ausbilden einer Steck-, Rast-, Klemm- oder Schraubverbindung zwischen den Formgebungsteilen (3) zum Ausbilden der Kavität (5);
Verfüllen der Kavität (5) mit einem fließfähigen Gießschaum, insbesondere einem Zweikomponenten-Polyurethanflüssigschaum; und
Entformen der Sanitärwanne (2) nach Aushärten des Gießschaums.

10. Verfahren nach Anspruch 9,
**dadurch gekennzeichnet,**
**dass** vor oder nach dem Schritt des Auftragens des Trennmittels oder vor oder nach dem Schritt des Aufbringens des ersten Beschichtungsmittels auf den Innenflächen (10) und Aushärten des ersten Beschichtungsmittels ein Ansetzen wenigstens eines Zubehörteils (21) der fertiggestellten Sanitärwanne (2) oder wenigstens eines aus der fertiggestellten Sanitärwanne (2) entformbaren Platzhalters (22) für wenigsten ein nachträglich in der fertiggestellten Sanitärwanne (2) einbaubares Zubehörteil (21) und/oder eine mit dem Zubehörteil (21) verbundene oder dem nachträglich in der fertiggestellten Sanitärwanne (2) einbaubaren Zubehörteil (21) verbundene oder verbindbare Verrohrung (23), Schlauchleitung oder Stromleitung, Zulauf-, Ablauf- und/oder Düsenanschlüsse, an wenigstens einem Formgebungsteil (3) durchgeführt wird.

11. Verfahren nach einem der vorhergehenden verfahrensbezogenen Ansprüche,
**dadurch gekennzeichnet,**
**dass** nach dem Verfüllen der Kavität (5) mit dem fließfähigen Gießschaum ein Verschließen der Einfüllöffnung (15) der Kavität (5) mit dem gesonderten Formgebungsteil (16) durchgeführt wird.

12. Verfahren nach einem der vorhergehenden verfahrensbezogenen Ansprüche,
**dadurch gekennzeichnet,**
**dass** das Aufbringen des ersten und/oder zweiten Beschichtungsmittels in einem Heißspritzverfahren erfolgt, wobei das erste Beschichtungsmittel insbesondere als elastischer Polyurethan-Lack und/oder das zweite Beschichtungsmittel als Polyurethan-Weichbeschichtungsmaterial ausgebildet ist.

13. Sanitärwanne (2) hergestellt mittels eines Verfahren nach einem der Ansprüche 9 bis 12,
mit einem Wannenkörper (20), wobei der Wannenkörper (20) einen mehrschichtigen Aufbau umfassend einen aus einem ausgehärteten Gießschaum gebildeten, inneren Wannenkern (14), eine den Wannenkern (14) umschließende, insbesondere aus einem Polyurethan-Weichbeschichtungsmaterial gebildete Zwischenschicht (19) und eine auf der Zwischenschicht (19) aufgebrachte, insbesondere aus einem elastischer Polyurethan-Lack gebildete zweite äußere Schicht (18) aufweist.

14. Sanitärwanne (2) nach Anspruch 13,
**dadurch gekennzeichnet,**
**dass** die Sanitärwanne (2) als Badewanne, Waschbecken, Duschwanne, Duschtasse oder Whirlpoolwanne ausgebildet ist.

15. Sanitärwanne (2) nach Anspruch 13 oder 14,
**dadurch gekennzeichnet,**
**dass** wenigstens ein Zubehörteil (21), wenigstens ein entformbarer Platzhalter (22) für wenigstens ein nachträglich in der fertiggestellten Sanitärwanne (2) einbaubares Zubehörteil (21) und/oder eine mit dem wenigstens einen Zubehörteil (21) verbundene oder dem wenigstens einen nachträglich in der fertiggestellten Sanitärwanne (2) einbaubaren Zubehörteil (21) verbundene oder verbindbare Verrohrung (23), Schlauchleitung oder Stromleitung, und/oder Zulauf-, Ablauf- oder Düsenanschlüsse, bei Herstellung in die Sanitärwanne (2) einformbar sind.
